# EUROPEAN PATENT APPLICATION

(11) **EP 3 840 161 A1**
(43) Date of publication of application: **23.06.2021**
(21) Application number: 20213618.0
(22) Date of filing: 11.12.2020
(51) Int. Cl.: H02J 3/32

(54) **METHOD AND DEVICE FOR MODEL CREATION FOR POWER DISTRIBUTION NETWORK AND METHOD AND DEVICE FOR CHARGE/DISCHARGE PLAN CREATION**

(30) Priority: 18.12.2019 JP 2019228606
(71) Applicant: Toyota Jidosha Kabushiki Kaisha, Aichi-ken, 471-8571 (JP)
(72) Inventor: KUBOTA, Tomoyuki, TOYOTA-SHI, AICHI-KEN, 471-8571 (JP); KOBUNA, Shunsuke, TOYOTA-SHI, AICHI-KEN, 471-8571 (JP); EHARA, Masato, TOYOTA-SHI, AICHI-KEN, 471-8571 (JP)
(74) Representative: Cabinet Beau de Loménie

(57) **Abstract**

A method for model creation for a power distribution network (N) includes an acquisition step of acquiring, when rechargeable batteries (51) mounted on a plurality of vehicles (50) are in electrical connection with a plurality of different charge/discharge points (1,2,3,4,5,...) of a power distribution network (N), charge/discharge amounts at the plurality of charge/discharge points (1,2,3,4,5,...) upon charging/discharging of the rechargeable batteries (51) and measurement results indicating values about power at a plurality of different measurement points (1,2,3,4,5,...) of the power distribution network (N); and a model creation step of creating an electrical characteristic model for the power distribution network (N), based on the acquired charge/discharge amounts and measurement results.

## Description

### BACKGROUND OF THE INVENTION

### 1. Field of the Invention

The present invention relates to a method and device for model creation for a power distribution network and a method and device for charge/discharge plan creation.

### 2. Description of the Related Art

There is known a system for supplying power by connecting a distributed generator that uses energy, such as photovoltaic power generation, called natural energy or renewable energy to a power distribution network in a power system of a power company. For example, Patent Document 1 discloses a technology for optimally controlling the voltage of a power distribution network on the basis of output information output in the past from a distributed generator that uses natural energy. Such a distributed generator constitutes a virtual power plant called VPP.

### Related-art Document

### Patent Document

Patent Document 1: Japanese Laid-open Patent Publication No. 2007-110809

In recent years, electric-powered vehicles on which large-capacity rechargeable batteries are mounted have been rapidly spread, and it is conceivable to use these rechargeable batteries as distributed generators to be connected to a power distribution network. In this case, the electric-powered vehicles are movable while changing their positions over time, and thus, it is difficult to predict in advance the power supply positions or power supply amounts thereof to the power distribution network, compared with a distributed generator using natural energy. However, power to be provided in the power distribution network is required to have a predetermined power quality, such as voltage within the standard value range. Therefore, in order to properly control supply and demand for power while ensuring the predetermined power quality, it is important to plan to charge/discharge a rechargeable battery of an electric-powered vehicle by grasping an electrical characteristic of the power distribution network to which power is to be supplied.

However, information about a specific configuration such as a route of the power distribution network or a cable configuration thereof is generally non-public information, and thus, it is difficult to know the electrical characteristic of the power distribution network on the basis of the specific configuration. Therefore, there is a demand for a technology for creating a model of electrical characteristic without depending on the information about a specific configuration of the power distribution network.

The present invention has been made in view of the above, and an object of the present invention is to provide a method and device for model creation for a power distribution network which enable to create an electrical characteristic model for a power distribution network without depending on information about a specific configuration of the power distribution network, and a method and device for charge/discharge plan creation that use the model.

According to an embodiment of the present invention, a method for model creation for a power distribution network, includes: an acquisition step of acquiring, when rechargeable batteries mounted on a plurality of vehicles are in electrical connection with a plurality of different charge/discharge points of a power distribution network, charge/discharge amounts at the plurality of charge/discharge points upon charging/discharging of the rechargeable batteries and measurement results indicating values about power at a plurality of different measurement points of the power distribution network; and a model creation step of creating an electrical characteristic model for the power distribution network, based on the acquired charge/discharge amounts and measurement results.

This configuration makes it possible to create an electrical characteristic model for a power distribution network without depending on information about a specific configuration of the power distribution network.

The method for model creation for the power distribution network may include a planning step of creating a plan to arrange the vehicles to the charge/discharge points and creating a plan to arrange the measurement points.

This configuration makes it possible to arrange the charge/discharge points and the measurement points according to the plan, creating the electrical characteristic model for the power distribution network more accurately.

According to an embodiment of the present invention, a method for charge/discharge plan creation includes creating, when rechargeable batteries mounted on a plurality of vehicles are in electrical connection with a plurality of different charge/discharge points of a power distribution network, a plan to cause the rechargeable batteries mounted on respective vehicles to perform charging/discharging, based on the electrical characteristic model for the power distribution network, the electrical characteristic model having been created by the method for model creation for the power distribution network.

This configuration makes it possible to more accurately create the charge/discharge plan on the basis of the electrical characteristic model for a power distribution network obtained without depending on information about a specific configuration of the power distribution network.

According to an embodiment of the present invention, a device for model creation for a power distribution network, includes: an acquisition unit that acquires, when rechargeable batteries mounted on a plurality of vehicles are in electrical connection with a plurality of different charge/discharge points of a power distribution network, charge/discharge amounts at the plurality of charge/discharge points upon charging/discharging of the rechargeable batteries and measurement results indicating values about power at a plurality of different measurement points of the power distribution network; and a model creation unit that creates an electrical characteristic model for the power distribution network, based on the acquired charge/discharge amounts and measurement results.

This configuration makes it possible to create an electrical characteristic model for a power distribution network without depending on information about a specific configuration of the power distribution network.

The device for model creation for the power distribution network may include a planning unit that plans to arrange the vehicles to the charge/discharge points and creates a plan to arrange the measurement points.

This configuration makes it possible to arrange the charge/discharge points and the measurement points according to the plan, creating the electrical characteristic model for the power distribution network more accurately.

According to an embodiment of the present invention, a device for charge/discharge plan creation, includes: an acquisition unit that acquires, when rechargeable batteries mounted on a plurality of vehicles are in electrical connection with a plurality of different charge/discharge points of a power distribution network, charge/discharge amounts at the plurality of charge/discharge points upon charging/discharging of the rechargeable batteries and measurement results indicating values about power at a plurality of different measurement points of the power distribution network; a model creation unit that creates an electrical characteristic model for the power distribution network, based on the acquired charge/discharge amounts and measurement results; and a charge/discharge plan creation unit that creates, when rechargeable batteries mounted on a plurality of vehicles are in electrical connection with a plurality of different charge/discharge points of the power distribution network, a plan to cause the rechargeable batteries to perform charging/discharging, based on the model.

This configuration makes it possible to more accurately create the charge/discharge plan on the basis of the electrical characteristic model for a power distribution network obtained without depending on information about a specific configuration of the power distribution network.

The device for charge/discharge plan creation may include a planning unit that plans to arrange the vehicles to the charge/discharge points and creates a plan to arrange the measurement points.

This configuration makes it possible to arrange the charge/discharge points and the measurement points according to the plan, creating the charge/discharge plan more accurately.

### EFFECT OF THE INVENTION

According to the present invention, when rechargeable batteries mounted on a plurality of vehicles are in electrical connection with a plurality of different charge/discharge points of a power distribution network, charge/discharge amounts at the plurality of charge/discharge points upon charging/discharging of the rechargeable batteries and measurement results indicating values about power at a plurality of different measurement points of the power distribution network are acquired, an electrical characteristic model for the power distribution network is created on the basis of the acquired charge/discharge amounts and measurement results, and thus, the electrical characteristic model for the power distribution network can be created without depending on information about a specific configuration of the power distribution network.

### BRIEF DESCRIPTION OF THE DRAWINGS

FIG. 1 is a configuration diagram of a system according to an embodiment;
FIG. 2 is a flowchart illustrating performance of a method for model creation for a power distribution network and method for charge/discharge plan creation;
FIG. 3 is a diagram illustrating an example of arrangement of charge/discharge points and measurement points in a power distribution network;
FIG. 4 is a diagram illustrating an example of power with which a power distribution network is charged or power that is discharged from the power distribution network, and measurement results therefrom; and
FIG. 5 is a diagram illustrating environmental conditions and test conditions given to a power distribution network, and measurement results therefrom.

### DETAILED DESCRIPTION OF THE PREFERRED EMBODIMENTS

Hereinafter, embodiments of the present invention will be specifically described with reference to the drawings. Note that in the drawings, the same or corresponding component elements are denoted by the same reference numerals and repetitive description thereof will be omitted.

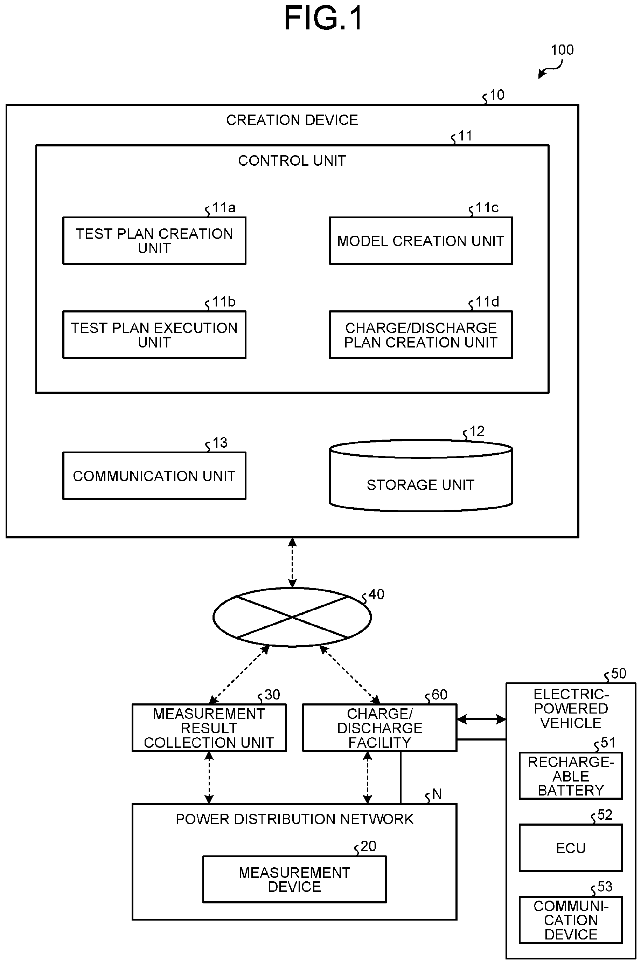

FIG. 1 is a configuration diagram of a system according to an embodiment. The system 100 is configured as a system for model creation for a power distribution network N and a system for charge/discharge plan creation. The power distribution network N is a power network including power cables for supplying power to houses, commercial and industrial facilities and the like in a certain area. A power system having a centralized generator, such as a thermal power plant or a hydroelectric power plant, or a distributed generator using natural energy may be connected to the power distribution network N.

### Configuration of system

Firstly, the configuration of the system 100 will be described. The system 100 includes a creation device 10, a plurality of measurement devices 20, a measurement result collection unit 30, a network 40, a plurality of electric-powered vehicles 50 as vehicles, and a plurality of charge/discharge facilities 60. Only one respective measurement device 20, one electric-powered vehicle 50, and one charge/discharge facility 60 are illustrated in FIG. 1.

The creation device 10 functions as a device for model creation for a power distribution network and a device for charge/discharge plan creation. The creation device 10 includes a control unit 11, a storage unit 12, and a communication unit 13.

The control unit 11 includes a processor such as a central processing unit (CPU), a digital signal processor (DSP), or a field-programmable gate array (FPGA), and a main storage unit such as a random access memory (RAM) and a read only memory (ROM). The control unit 11 loads a program stored in the storage unit 12 into a work area of the main storage unit to execute the program, controls each component unit through execution of the program, thus, achieving a functional module satisfying a predetermined purpose.

The control unit 11 includes, as functional modules, a test plan creation unit 11a as a planning unit, a test plan execution unit 11b, a model creation unit 11c, and a charge/discharge plan creation unit 11d. The test plan creation unit 11a is a module that creates a test plan for creating an electrical characteristic model for the power distribution network N. Note that in the following, the electrical characteristic model for the power distribution network N may be referred to as a model for the power distribution network N.

The test plan execution unit 11b is a module that performs various processes for executing the created test plan. The model creation unit 11c is a module that creates a model for the power distribution network N on the basis of conditions under which a test having been performed and results thereof. The charge/discharge plan creation unit 11d is a module that creates a charge/discharge plan for an electric-powered vehicle 50 for which control of supply and demand for power in the power distribution network N is performed by using the created model for the power distribution network N. The functions of these functional modules will be described in detail later.

The storage unit 12 is physically includes a storage medium selected from a volatile memory such as a RAM, a non-volatile memory such as a ROM, an erasable programmable ROM (EPROM), a hard disk drive (HDD), a removable medium and the like. Note that the removable medium includes, for example, a universal serial bus (USB) memory or a disc recording medium such as a compact disc (CD), a digital versatile disc (DVD), or a Blu-ray (BD) (registered trademark) disc. In addition, the storage unit 12 may be configured using a computer-readable recording medium such as a memory card that is configured to be externally mounted. The storage unit 12 is configured to store an operating system (OS), various programs, various tables, various databases and the like for performing operations of the creation device 10. The storage unit 12 stores, for example, identification information of each measurement device 20 and information about a connection point (also referred to as measurement point) of the measurement device 20 with the power distribution network N, identification information of an electric-powered vehicle 50 and electric characteristic information about a rechargeable battery 51 mounted thereon, identification information of a charge/discharge facility 60, and information about a connection point (also referred to as charge/discharge point) of the charge/discharge facility 60 with the power distribution network N and the like. Note that a plurality of the charge/discharge points and a plurality of the measurement points are all dispersedly arranged at different positions in the power distribution network N.

The communication unit 13 is, for example, a local area network (LAN) interface board or a wireless communication circuit for wireless communication. The LAN interface board or the wireless communication circuit is connected to the network 40. The communication unit 13 makes a connection with the network 40 to communicate with the measurement result collection unit 30, the plurality of electric-powered vehicles 50, and the plurality of charge/discharge facilities 60. The network 40 includes, for example, the Internet network that is a public communication network. Furthermore, the communication unit 13 is also configured to receive a command to create a model for the power distribution network N or a command to create a charge/discharge plan, for example, from a management device managed by an aggregator that controls supply and demand for power.

Each of the measurement devices 20 is a device that is electrically connected to different points in the power distribution network N and measures a value related to power in the power distribution network N. The measurement devices 20 are each configured to measure, for example, the voltage of power flowing in the power distribution network. Furthermore, each measurement device 20 includes a communication function, transmitting identification information of itself and measurement data to the measurement result collection unit 30. Furthermore, the measurement device 20 is configured to receive a command from the test plan execution unit 11b via the measurement result collection unit 30 so as to activate a measurement function, start measurement, finish the measurement, and transmit measurement data.

The measurement result collection unit 30 is, for example, a data logger and includes a communication unit, a storage unit, and a control unit. These communication unit, storage unit, and control unit can have similar configurations as the corresponding elements in the creation device 10. The measurement result collection unit 30 receives identification information of a measurement device and measurement data that are transmitted from each measurement device 20, at the communication unit and stores the identification information and the measurement data in the storage unit. Furthermore, the measurement result collection unit 30 reads identification information of a measurement device and measurement data, from the storage unit and transmits the identification information and the measurement data, from the communication unit to the creation device 10 via the network 40. Furthermore, the measurement result collection unit 30 is also configured to transmit, to the measurement device 20, commands from the test plan execution unit 11b to activate the measurement function, activate measurement, finish measurement, and transmit measurement data.

The electric-powered vehicles 50 each include a rechargeable battery 51, an electronic control unit (ECU) 52, and a communication device 53. The electric-powered vehicle 50 is a vehicle that is configured to charge the rechargeable battery 51 from outside or discharge the power of the rechargeable battery 51 to the outside and includes, for example, an electric vehicle (EV) or a plug-in hybrid electric vehicle (PHEV). The ECU 52 mainly includes a single microcomputer or a plurality of microcomputers to control charging or discharging operation of the rechargeable battery 51, control communication operation of the communication device 53, and control operations of the other electronic devices mounted on the electric-powered vehicle 50. The communication device 53 is, for example, a car navigation system with a communication function or an information communication device, communicates with the creation device 10 via the network 40, and notifies or displays a vehicle allocation instruction, charging/discharging instruction or the like from the creation device 10 by displaying a screen or emitting sound.

The charge/discharge facilities 60 are each, for example, a charging station and is electrically connected to the power distribution network N. Each charge/discharge facility 60 includes a charging/discharging cable having a plug, and the plug is connected to an inlet of an electric-powered vehicle 50, charging a rechargeable battery 51 mounted on the electric-powered vehicle 50 with power supplied from the power distribution network N or supplying power discharged from the rechargeable battery 51 to the power distribution network N. The charge/discharge facility 60 includes a communication unit, a storage unit, and a control unit. These communication unit, storage unit, and control unit can have similar configurations as the corresponding elements in the creation device 10. The control unit is configured to control charging/discharging operation. The communication unit is configured to communicate with the creation device 10 via the network 40 communicate with a communication unit of an electric-powered vehicle 50 through the charge/discharge cable.

Method for model creation for power distribution network N and method for charge/discharge plan creation

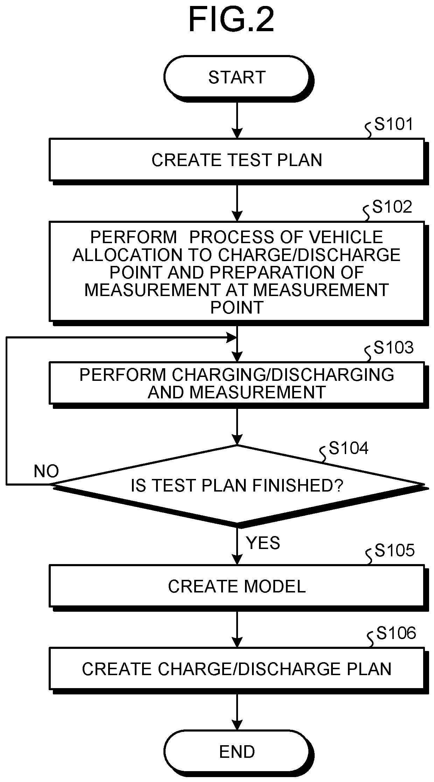

Next, a method for model creation for the power distribution network N and a method for charge/discharge plan creation that are performed by the creation device 10 in the system 100 will be described with reference to a flowchart of FIG. 2. This flowchart is started, for example, when a command to create a model for the power distribution network N and a command to create a charge/discharge plan are received from the management device managed by the aggregator.

Firstly, in step S101 the test plan creation unit 11a in the control unit 11 of the creation device 10 creates, as a planning step, a test plan to create a model for the power distribution network N. Specifically, the test plan has, as test conditions, items of arrangement of an electric-powered vehicle 50 to a charge/discharge facility 60 that is to perform charging/discharging, a charge/discharge amount from a rechargeable battery 51 mounted on an electric-powered vehicle 50, and selection of a measurement device 20 that performs measurement (i.e., arrangement of measurement points) and the like. For the test conditions, a plurality of test conditions is set on the basis of various information stored in the storage unit 12 by using an optimization method such as an experimental design. The set test conditions are stored in the storage unit 12.

Note that when a similar test plan has been executed in the past, test conditions and measurement results in the past may be stored in the storage unit 12. In this case, the test plan creation unit 11a may create test conditions in consideration of the test conditions and measurement results in the past as well. Consideration of the test conditions and the measurement results in the past, it is possible, for example, to reduce the number of new test conditions to be created or obtain the effects of improved accuracy in model.

In step S102, in order to execute the created test plan, the test plan execution unit 11b performs a process of vehicle allocation for an electric-powered vehicle 50 to a charge/discharge facility 60 corresponding to a planned charge/discharge point and a process of measurement preparation by a measurement device 20 at a measurement point.

The process of vehicle allocation is, for example, a process of instructing an owner or a driver of an electric-powered vehicle 50 on which a rechargeable battery 51 having an electric characteristic chargeable/dischargeable under a test condition to move to a charge/discharge facility 60. For example, the test plan execution unit 11b transmits an instruction from the communication unit 13 to a communication device 53 of a target electric-powered vehicle 50, and the communication device 53 notifies the owner or driver of the electric-powered vehicle 50.

The process of measurement preparation is, for example, a process of instructing a target measurement device 20 to activate a measurement function.

Subsequently, in step S103, the test plan execution unit 11b performs charging/discharging and measurement. For example, the test plan execution unit 11b transmits an instruction to control the ECU 52, from the communication unit 13 to the communication device 53 of the target electric-powered vehicle 50 and causes the rechargeable battery 51 to charge or discharge power according to the test condition. For example, the test plan execution unit 11b transmits a command to cause the measurement device 20 to start a measurement, finish the measurement, and transmit data sequentially. Measurement result data acquired from the measurement device 20 is stored in the storage unit 12.

When charging/discharging and measurement are completed for one test condition, the process proceeds to step S104. In step S104, the test plan execution unit 11b determines whether the test plan has been finished after being executed under all the test conditions. If it is determined that the test plan has not finished (step S104, No), the process returns to S103, and charging/discharging and measurement are performed under a next test condition. On the other hand, if it is determined that the test plan has completed (step S104, Yes), the flow proceeds to S105.

In step S105, the model creation unit 11c that also serves as an acquisition unit acquires, as an acquisition step, a charge/discharge amount and a measurement result from the storage unit 12, creates, as a model creation step, a model for the power distribution network N on the basis of the acquired charge/discharge amount and measurement result, and stores the created model in the storage unit 12. The model is, for example, a model showing that what voltage value can be obtained at each measurement point when, at each charge/discharge point, each charge/discharge facility 60 is charged with power of a predetermined value or each charge/discharge facility 60 discharges power of a predetermined value. In the model, an input value indicates power value upon charging/discharging at each charge/discharge point, and an output value indicates a voltage value at a measurement point. This model may be a function or table data.

Subsequently, in step S106, the charge/discharge plan creation unit 11d creates a charge/discharge plan for controlling supply and demand for power in the power distribution network N by using the created model for the power distribution network N. Specifically, the charge/discharge plan is a plan to arrange an electric-powered vehicle 50 to a charge/discharge facility 60 for which charging/discharging is performed and set a charge/discharge amount from a rechargeable battery 51 mounted on the electric-powered vehicle 50, on the basis of information about supply and demand for power in the power distribution network N, such as information about supply and demand for power from a power system or information about a load connected to the power distribution network N. In this case, the rechargeable battery 51 serves as a power supply forming VPP upon discharging and serves as a load upon charging. The information about supply and demand for power in the power distribution network N is provided from, for example, the aggregator and stored in the storage unit 12 of the creation device 10.

The arrangement and the setting of the charge/discharge amount are performed using a known optimization method, in consideration of maintaining the power quality of power flowing through the power distribution network N regardless of charging/discharging of the rechargeable battery 51. For example, the voltage value of power flowing through the power distribution network N is sometimes required to fluctuate within a predetermined range, but, for example, it is considered that the voltage value is likely to be outside the predetermined range at an end of the power distribution network N. In addition, it can be considered that there is a possibility that the amount of current exceeds the capacity at an end of the power distribution network N. With the use of the model for the power distribution network N, it becomes easy to create a charge/discharge plan more accurately and appropriately, preventing the voltage value from being outside the range or excess in the amount of current.

The charge/discharge plan creation unit 11d stores the created charge/discharge plan in the storage unit 12. Then, the process ends. Note that the charge/discharge plan stored in the storage unit 12 may be transmitted thereafter to the management device of the aggregator.

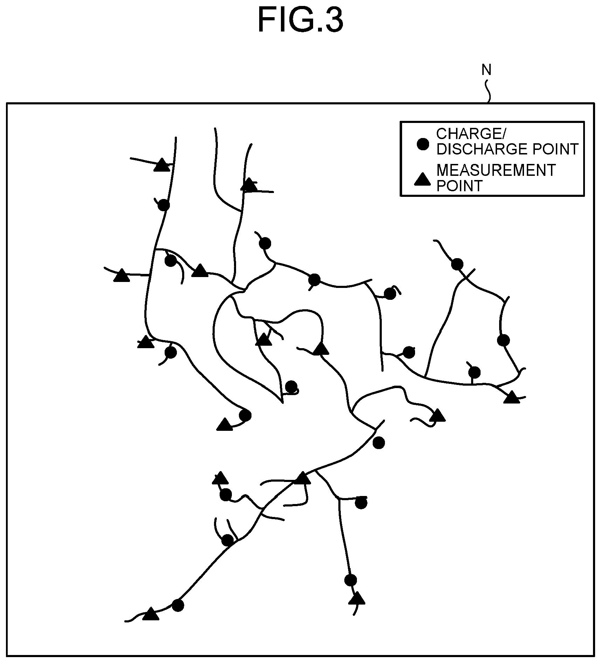

FIG. 3 is a diagram illustrating an example of arrangement of charge/discharge points and measurement points in a power distribution network. As illustrated in FIG. 3, the charge/discharge points and the measurement points are dispersedly arranged at different positions in the power distribution network N. Note that a pattern of the power distribution network N is illustrated for the sake of explanation, and such a pattern may not be obtained depending on the method for model creation.

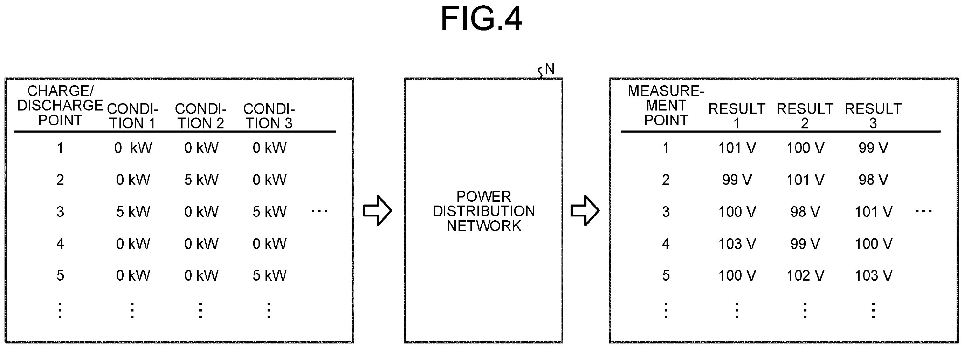

FIG. 4 is a diagram illustrating an example of power with which the power distribution network N is charged or power that is discharged from the power distribution network N, and measurement results therefrom. Conditions 1, 2, 3,... indicates power values as the test conditions at the charge/discharge points 1, 2, 3, 4, 5,.... The power value is indicated by, for example, a positive value for discharging and a negative value for charging. In the example illustrated in FIG. 4, under condition 1, discharging and charging are not performed at the charge/discharge points 1, 2, 4, and 5, and 5 kW discharge is performed at the charge/discharge point 3. Furthermore, under condition 2, discharging and charging are not performed at the charge/discharge points 1, 3, 4, and 5, and 5 kW discharge is performed at the charge/discharge point 2. Note that each power value upon charging/discharging and a time of charging/discharging are set, for example, to such values that the charging/discharging by the test does not affect the supply and demand for power in the power distribution network N.

Furthermore, in FIG. 4, results 1, 2, 3,... indicates voltage values as measurement data obtained corresponding to the conditions 1, 2, 3,... at the measurement points 1, 2, 3, 4, 5,.... In the example illustrated in FIG. 4, result 1 corresponding to the condition 1 shows a measured value of 101 V at the measurement point 1, 99 V at the measurement point 2, 100 V at the measurement point 3, 103 V at the measurement point 4, and 100 V at the measurement point 5. Furthermore, result 2 corresponding to the condition 2 shows a measured value of 100 V at the measurement point 1, 101 V at the measurement point 2, 98 V at the measurement point 3, 99 V at the measurement point 4, and 102 V at the measurement point 5. In other words, the resulting voltage values change according to conditions.

For example, Japanese commercial power is defined to have a voltage variation range of 101 V ± 6 V in Electricity Business Act. In the example illustrated in FIG. 4, all the results are within the variation range according to the definition.

According to the above-described method for model creation for the power distribution network N and method for charge/discharge plan creation that are performed by the creation device 10, the electrical characteristic model for the power distribution network N can be created without depending on the information about a specific configuration of the power distribution network N, and further, the charge/discharge plan can be more accurately created on the basis of the created model.

Note that the optimization method used for model creation and charge/discharge plan creation includes, for example, search-based testing. In a case where the search-based testing is used in model creation, charging/discharging is performed under a certain test condition, and a condition (measurement result) that is to be satisfied by the power distribution network N is set as a verification condition. For example, as the condition that is to be satisfied by the power distribution network N, a measurement result is set within the range of 101 V ± 6 V. Then, the test condition is changed so that the measurement result does not satisfy the condition that is to be satisfied by the power distribution network N, in other words, so as to have a failure, and charging/discharging is performed again. By repeating this, an optimum test plan can be obtained. Furthermore, in a case where the search-based testing is used in charge/discharge plan creation, a charging/discharging condition planned on the basis of the information about supply and demand for power in the power distribution network N is input to a model, and a condition (output value) that is to be satisfied by the power distribution network N is set as a verification condition. Then, the charging/discharging condition is changed so that the output value does not satisfy the condition that is to be satisfied by the power distribution network N, in other words, so as to have a failure, and then, the charging/discharging condition is input again to the model. By repeating this, an optimum charge/discharge plan can be obtained.

In addition, a model for the power distribution network N, as a learned model, may be created by accumulating data about a model created on the basis of a test plan as described above and performing machine learning using the accumulated data as big data. Such a model can be generated by machine learning, for example, with an input/output data set having test conditions as input data and measurement results as output parameters, as teaching data. The machine learning desirably uses an appropriate method but may use, for example, deep learning that uses a neural network.

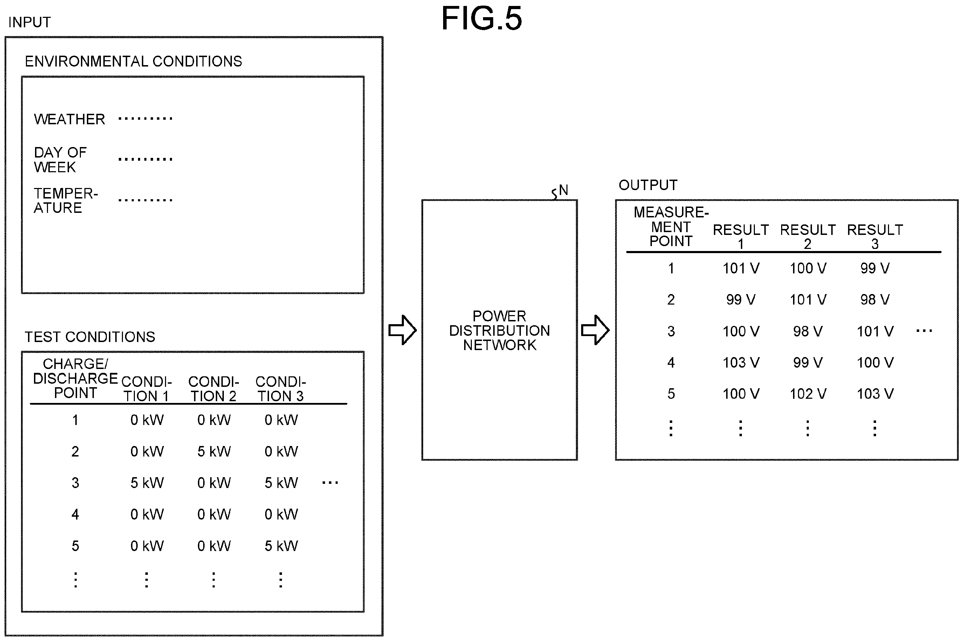

Furthermore, for example, a measurement result obtained under a test condition can change according to a situation upon performance of a test, for example, according an external environment, even in the same power distribution network N. As factors of such change, various factors such as weather, the day of the week, and ambient temperature can be considered. These factors are also factors that cause a change in load on the power distribution network N. Therefore, as illustrated in FIG. 5, a model may be generated by machine learning, with an input/output data set in which these factors during a test and test conditions are used as the input data and measurement results are used as the output parameters, as the teaching data. This configuration makes it possible to generate a model that responds to a change in the external environment or a change in load.

Furthermore, when an electric-powered vehicle 50 is a vehicle that enables automatic driving, the test plan execution unit 11b may cause, as a vehicle allocation process, the electric-powered vehicle 50 to move to a predetermined charge/discharge facility 60 by automatic driving.

Furthermore, in the flowchart illustrated in FIG. 2, model creation and charge/discharge plan creation are performed continuously in one flowchart, but the creation may be performed separately. Furthermore, the device for model creation and the device for charge/discharge plan creation may be configured as independent devices. Furthermore, the test plan creation unit and the test plan execution unit may be provided in a different device from the device for model creation, and the device for model creation may acquire test conditions and measurement results from the different device to create a model.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A method for model creation for a power distribution network (N), the method comprising:
an acquisition step of acquiring, when rechargeable batteries (51) mounted on a plurality of vehicles (50) are in electrical connection with a plurality of different charge/discharge points (1,2,3,4,5,..) of a power distribution network (N), charge/discharge amounts at the plurality of charge/discharge points (1,2,3,4,5,..) upon charging/discharging of the rechargeable batteries (51) and measurement results indicating values about power at a plurality of different measurement points (1,2,3,4,5,..) of the power distribution network (N); and
a model creation step of creating an electrical characteristic model for the power distribution network (N), based on the acquired charge/discharge amounts and measurement results.

2. The method for model creation for the power distribution network (N) according to claim 1, further comprising a planning step of creating a plan to arrange the vehicles (50) to the charge/discharge points (1,2,3,4,5,..) and creating a plan to arrange the measurement points (1,2,3,4,5,..).

3. A method for charge/discharge plan creation, the method comprising
creating, when rechargeable batteries mounted on a plurality of vehicles (50) are in electrical connection with a plurality of different charge/discharge points (1,2,3,4,5,..) of a power distribution network (N), a plan to cause the rechargeable batteries (51) mounted on respective vehicles (50) to perform charging/discharging, based on the electrical characteristic model for the power distribution network (N), the electrical characteristic model having been created by the method for model creation for the power distribution network (N) according to claim 1 or 2.

4. A device (10) for model creation for a power distribution network (N), the device (10) comprising:
an acquisition unit (11c) configured to acquire, when rechargeable batteries (51) mounted on a plurality of vehicles (50) are in electrical connection with a plurality of different charge/discharge points(1,2,3,4,5,..) of a power distribution network (N), charge/discharge amounts at the plurality of charge/discharge points(1,2,3,4,5,..) upon charging/discharging of the rechargeable batteries(51)and measurement results indicating values about power at a plurality of different measurement points(1,2,3,4,5,..) of the power distribution network (N); and
a model creation unit (11c) configured to create an electrical characteristic model for the power distribution network (N), based on the acquired charge/discharge amounts and measurement results.

5. The device (10) for model creation for a power distribution network (N) according to claim 4, further comprising a planning unit (11a) configured to plan to arrange the vehicles (50) to the charge/discharge points (1,2,3,4,5,..) and to create a plan to arrange the measurement points (1,2,3,4,5,..).

6. A device (10) for charge/discharge plan creation, the device (10) comprising:
an acquisition unit (11c) configured to acquire, when rechargeable batteries (51) mounted on a plurality of vehicles (50) are in electrical connection with a plurality of different charge/discharge points (1,2,3,4,5,..) of a power distribution network (N), charge/discharge amounts at the plurality of charge/discharge points (1,2,3,4,5,..) upon charging/discharging of the rechargeable batteries (51) and measurement results indicating values about power at a plurality of different measurement points (1,2,3,4,5,..) of the power distribution network (N);
a model creation unit (11c) configured to create an electrical characteristic model for the power distribution network (N), based on the acquired charge/discharge amounts and measurement results; and
a charge/discharge plan creation unit (11d) configured to create, when rechargeable batteries (51) mounted on a plurality of vehicles (50) are in electrical connection with a plurality of different charge/discharge points (1,2,3,4,5,..) of the power distribution network (N), a plan to cause the rechargeable batteries (51) to perform charging/discharging, based on the model.

7. The device (10) for charge/discharge plan creation according to claim 6, further comprising a planning unit (11a) configured to plan to arrange the vehicles (50) to the charge/discharge points (1,2,3,4,5,..) and to create a plan to arrange the measurement points (1,2,3,4,5,..).
